# EUROPÄISCHE PATENTSCHRIFT

(11) **EP 3 337 296 B1**
(45) Veröffentlichungstag und Bekanntmachung des Hinweises auf die Patenterteilung: **17.07.2019**
(21) Anmeldenummer: 17206496.6
(22) Anmeldetag: 11.12.2017
(51) Int. Cl.: H05B 6/12

(54) **INDUKTIONSKOCHFELD**
INDUCTION COOKTOP
CHAMP DE CUISSON À INDUCTION

(30) Priorität: 19.12.2016 DE 102016225463
(43) Veröffentlichungstag der Anmeldung: 20.06.2018
(73) Patentinhaber: E.G.O. Elektro-Gerätebau GmbH, 75038 Oberderdingen (DE)
(72) Erfinder: Thimm, Wolfgang, 76137 Karlsruhe (DE)
(74) Vertreter: Patentanwälte Ruff, Wilhelm, Beier, Dauster & Partner mbB

(56) Entgegenhaltungen:
- EP-A1- 1 420 614
- WO-A1-2008/120449
- WO-A1-2015/062947
- US-A- 4 525 629

## Beschreibung

Die Erfindung betrifft ein Induktionskochfeld mit einer Kochfeldplatte und mit mindestens einer darunter angeordneten induktiven Beheizung.

Induktionskochfelder sind beispielsweise aus der DE 10156777 A1 bekannt. Dort bildet jeweils eine Induktionsheizspule eine induktive Beheizung für eine definierte Kochstelle an der Kochfeldplatte. Ein darauf aufgesetztes geeignetes Kochgefäß kann dann induktiv beheizt werden. Für eine optimale Beheizung sollte die Größe des Kochgefäßes zur Induktionsheizspule passen bzw. das Kochgefäß ist idealerweise nur leicht größer als die Induktionsheizspule oder etwa gleich groß. Ein Abstand zwischen der Induktionsheizspule und dem aufgesetzten Kochgefäß sollte möglichst gering sein für eine möglichst effiziente und hohe Leistungsübertragung. Dazu ist die Induktionsheizspule möglichst nahe an der Unterseite der Kochfeldplatte angeordnet.

Aus der DE 102015203316 A1 ist ein weiteres Induktionskochfeld mit einer Kochfeldplatte und mehreren darunter angeordneten Induktionsheizspulen bekannt. Um das Aufsetzen eines Kochgefäßes an beliebiger Stelle auf die Kochfeldplatte zu ermöglichen oder um die relative Anordnung zwischen aufgesetztem Kochgefäß und zu dessen Beheizung verwendeter Induktionsheizspule zu optimieren, sind dort die Induktionsheizspulen beweglich ausgebildet. Dafür ist ein relativ aufwändiger Bewegungsmechanismus vorgesehen, der konstruktiv aufwändig ist.

Aus der WO 2008/120449 A1 ist ein Induktionskochfeld mit Kochfeldplatte und darunter angeordneter induktiver Beheizung bekannt. Unter eine Induktionsspule sind mehrere Ferritstäbe angeordnet, die in radialer Richtung verlaufen. Sie dienen zur Beeinflussung des von der Induktionsspule erzeugten Magnetfelds und verhindern Feldlinien darunter.

Aus der EP 1 420 614 A1 ist ein weiteres Induktionskochfeld mit einer Kochfeldplatte aus Glaskeramik bekannt, unterhalb der eine flache Induktionsheizspule angeordnet ist. Zwischen Kochfeldplatte und Induktionsspule ist thermisch isolierendes Material als Schicht vorgesehen. Auch unter dieser Induktionsspule sind Ferritstäbe in radialer Richtung angeordnet, die wie zuvor erläutert zur Beeinflussung des von der Induktionsspule erzeugten Magnetfelds dienen.

Aus der WO 2015/062947 A1 ist eine Vorrichtung zur drahtlosen Energieübertragung bekannt. Hierfür ist eine Induktionsspule vorgesehen in einem Leistungsübertrager unterhalb einer Platte. Auf die Platte kann ein Leistungsempfänger aufgesetzt sein, der die induktiv übertragene Energie zum Betrieb einer elektrischen Funktionseinheit nutzt.

### Aufgabe und Lösung

Der Erfindung liegt die Aufgabe zugrunde, ein eingangs genanntes Induktionskochfeld zu schaffen, mit dem Probleme des Standes der Technik gelöst werden können und es insbesondere möglich ist, eine induktive Energieübertragung von einer Induktionsheizspule als induktive Beheizung in ein darüber auf eine Kochfeldplatte oder auf eine Abdeckung aufgestelltes Kochgefäß zu verbessern und vorzugsweise Abweichungen vom Optimum in der Position des Kochgefäßes relativ zu der Induktionsheizspule ausgleichen zu können.

Gelöst wird diese Aufgabe durch ein Induktionskochfeld mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Es ist vorgesehen, dass das Induktionskochfeld eine Kochfeldplatte oder eine Abdeckung aufweist. Unter der Kochfeldplatte oder der Abdeckung ist eine induktive Beheizung angeordnet, die im Wesentlichen in einer Ebene verläuft. Diese Ebene kann vorteilhaft parallel zur Kochfeldplatte oder zur Abdeckung sein. Die induktive Beheizung weist mindestens eine Induktionsheizspule auf, bei einem vorteilhaften Induktionskochfeld können es vier bis sechs oder sogar acht solcher Induktionsheizspulen sein. Sie können gleich groß oder unterschiedlich ausgebildet sein.

Erfindungsgemäß ist vorgesehen, dass in einer Ebene zwischen der Ebene der induktiven Beheizung und der Unterseite der Kochfeldplatte oder der Abdeckung eine magnetische Linse vorgesehen ist. Dies soll bedeuten, dass die magnetische Linse sozusagen auf einer Zwischenhöhe zwischen der Ebene der induktiven Beheizung und der Kochfeldplatte oder der Abdeckung und somit auch dem darüber aufgesetzten Kochgefäß angeordnet ist. Die magnetische Linse kann durch entsprechende Ausbildung das von der induktiven Beheizung bzw. der Induktionsheizspule erzeugte Magnetfeld beeinflussen oder sogar möglicherweise etwas ablenken bzw. umlenken oder formen. So kann durch entsprechende Ausgestaltung der magnetischen Linse die induktive Energie möglichst optimal in ein darüber aufgestelltes Kochgefäß eingebracht werden. Dadurch können Abweichungen vom Optimum hinsichtlich der vorgenannten relativen Aufstellposition des Kochgefäßes relativ zur Induktionsheizspule derart ausgeglichen werden, dass die Energieübertragung eben optimal ist. Ebenso können mögliche Größenabweichungen ausgeglichen werden, beispielsweise weil das Kochgefäß eigentlich für diese Induktionsheizspule deutlich zu klein oder deutlich zu groß ist.

Bei der Erfindung ist vorgesehen, dass die magnetische Linse genau zwischen der induktiven Beheizung bzw. der Induktionsheizspule und der Unterseite der Kochfeldplatte oder dem Boden des Kochgefäßes vorgesehen ist. Besonders vorteilhaft ist eine magnetische Linse zentrisch bezüglich ihrer Wirksamkeit, insbesondere auch bezüglich ihrer Anordnung, zu einer auf der Oberseite der Kochfeldplatte markierten bzw. aufgezeichneten Kochfeldplatte. So kann eine bessere Wirksamkeit der magnetischen Linse und somit auch der durch sie übertragenen induktiven Energie für eine der Kochstelle entsprechenden Position eines aufgesetzten Kochgefäßes erreicht werden. Alternativ kann die magnetische Linse zu einer darunter angeordneten Induktionsheizspule zentrisch sein, um sozusagen deren an sich auch zentrisches bzw. punktsymmetrisches Wechselfeld optimal empfangen zu können.

In vorteilhafter Ausgestaltung der Erfindung kann pro einzelner Induktionsheizspule des Induktionskochfelds eine über dieser Induktionsheizspule, insbesondere zentrisch darüber, angeordnete magnetische Linse vorgesehen sein. In Abwandlung dieses Gedankens ist es auch möglich, dass das Induktionskochfeld mehrere Kochstellen bzw. Induktionsheizspulen mit einer zugeordneten magnetischen Linse aufweist, aber auch mindestens eine Induktionsheizspule ohne eine magnetische Linse. Diese Induktionsheizspule kann dann eine sozusagen etwas einfachere Kochstelle bilden ohne die Anpassungsmöglichkeiten bezüglich des Magnetfelds bzw. der Energieübertragung, die eben mit der Erfindung durch die magnetische Spule erreicht werden können. Dadurch ist aber insgesamt der Aufwand für den Aufbau eines Induktionskochfelds etwas geringer bzw. reduziert.

Bei der Erfindung überdeckt die magnetische Linse eine Fläche, die im Wesentlichen der Flächenüberdeckung oder auch der genauen Fläche der Induktionsheizspule entspricht. Dies bedeutet in einem einfachen Fall, dass Induktionsheizspule und magnetische Linse gleich groß sind.

In einer weiteren Ausgestaltung der Erfindung gemäß einer Ausgestaltung kann vorgesehen sein, dass einer Induktionsheizspule mehrere magnetische Linsen zugeordnet sind, beispielsweise vier, fünf oder sieben Linsen in gleichmäßiger Verteilung, in den beiden letzten Fällen mit jeweils einer zentrischen magnetischen Linse. Dadurch können möglicherweise, vor allem wenn die magnetischen Linsen individuell beeinflussbar sind, bessere Anpassungen des Magnetfelds erfolgen.

In vorteilhafter Ausgestaltung der Erfindung kann die magnetische Linse flach sein und im Wesentlichen in einer Ebene verlaufen, welche parallel zu einer Ebene ist, in der die induktive Beheizung bzw. die mindestens eine Induktionsheizspule verläuft. Dies ermöglicht einen insgesamt möglichst flachen Aufbau des Induktionskochfelds einerseits und andererseits sind dann die Mittelsenkrechten der magnetischen Linse und der induktiven Beheizung bzw. der Induktionsheizspule parallel zueinander. Dies verbessert die Wirksamkeit.

Bei der Erfindung besteht die magnetische Linse aus sogenannten Metamaterialien oder weist solche Metamaterialien auf. Durch ihre Besonderheiten können damit besondere und neuartige Möglichkeiten zur Energieübertragung bzw. Beeinflussung des Magnetfelds genutzt werden. Vorteilhaft wird ein NIM-Material verwendet wegen des negativen Brechungsindexes. So kann vor allem eine ansonsten nur schwer mögliche Bündelung und Lenkung des Magnetfelds erreicht werden. Alternativ kann mit einer solchen magnetischen

Linse auch eine Aufweitung des Magnetfelds erreicht werden. Das Metamaterial kann negative Permittivität ε und eine negative Permeabilität µ haben.

Derartige magnetische Linsen aus solchen sogenannten Metamaterialien sind unter anderem auch bekannt als Pendry-Linsen bzw. als Superlinse und im Englischen als "superlens" oder "super lens", siehe beispielsweise unter https://en.wikipedia.org/wiki/Superlens zu solchen Metamaterial-Linsen.

Eine Ansteuerung für die induktive Beheizung bzw. die mindestens eine Induktionsheizspule ist vorteilhaft so ausgebildet, dass sie in einem Frequenzbereich zwischen 20 kHz und 100 kHz arbeitet. Somit liegt die Frequenz weitgehend außerhalb des menschlichen Hörbereichs und eine Bedienperson nimmt weniger störende Geräusche wahr.

In einer möglichen Ausgestaltung der Erfindung kann mindestens eine magnetische Linse bewegbar ausgebildet sein. Vorteilhaft ist eine solche Bewegbarkeit in einer Ebene parallel zur Kochfeldplatte vorgesehen bzw. in der Ebene, in der sich die magnetische Linse selbst erstreckt. Dann kann sie sehr gut zwischen Kochfeldplatte und induktiver Beheizung bewegt werden. Durch eine Bewegbarkeit der magnetischen Linse kann eine sehr gute Anpassung an eine Position eines aufgesetzten Kochgefäßes erreicht werden, insbesondere dann, wenn dieses nicht zentrisch bzw. nicht optimal über der Induktionsheizspule aufgesetzt worden ist.

Eine Bewegbarkeit der magnetischen Linse kann einerseits beliebig sein mit vollem Freiheitsgrad, insbesondere in einem Bereich von 1 cm bis 5 cm oder sogar 10 cm um einen Außenrand einer zugehörigen Induktionsheizspule herum. Alternativ kann eine magnetische Linse auf einer umlaufenden Bahn oder einer Kreisbahn entsprechend der Außenkontur der Induktionsheizspule bewegt werden, beispielsweise auf einer außerzentrisch gelagerten Drehachse. Damit kann im Prinzip jede Position angefahren werden, die ein auf eine Kochstelle mit einem Versatz von 2 cm bis 5 cm oder sogar 10 cm aufgestelltes Kochgefäß haben kann. Für eine genaue Detektion der Position eines aufgesetzten Kochgefäßes können, neben der Induktionsheizspule selbst, auch sogenannte Topferkennungssensoren vorgesehen sein, wie sie beispielsweise aus der DE 102014224051 A1 bekannt sind. So kann ein relativ einfacher und robuster Bewegungsmechanismus für eine magnetische Linse geschaffen werden, der dennoch eine gute und ausreichende Bewegbarkeit derselben ermöglicht.

In einer möglichen Ausgestaltung der Erfindung kann die magnetische Linse mit einer Induktionsheizspule verbunden sein bzw. daran befestigt sein. So können sie als Baueinheit ausgebildet sein und möglicherweise bereits vormontiert sein, so dass das Montieren des Induktionskochfelds schneller erfolgen kann. In einer möglichen Ausgestaltung der Erfindung ist die Induktionsheizspule zusammen mit der magnetischen Linse bewegbar, so dass eben beide zusammen bewegt werden können, beispielsweise um eine Position entsprechend einem Ort eines darüber aufgesetzten Kochgefäßes zu optimieren.

In einer möglichen Ausbildung der Erfindung kann die magnetische Linse derart ausgebildet sein sowie über einer Induktionsheizspule angeordnet sein, dass die induktive Beheizung eines darüber auf die Kochfeldplatte oder die Abdeckung aufgestellten Kochgefäßes über einen größeren Abstand als üblich erfolgen kann, also über mehr als 1 cm bis 1,5 cm, vorzugsweise 5 cm bis 15 cm. So können möglicherweise dickere Kochfeldplatten verwendet werden, insbesondere aus einem anderen Material als Glaskeramik, wobei dann dieses andere Material leichter zu bearbeiten ist und preisgünstiger sein kann.

In einer möglichen Ausgestaltung der Erfindung kann die magnetische Linse so ausgebildet sein, dass sie divergierend ist bzw. das Magnetfeld nicht bündelt, sondern flächenmäßig sozusagen vergrößert nach außen hin. Dadurch ist es möglich, flächenmäßig größere bzw. sogar deutlich größere Kochgefäße passend zu beheizen. In ähnlicher Ausgestaltung der Erfindung kann die magnetische Linse auch konvergierend ausgebildet sein, um das Beheizen von kleineren Kochgefäßen als die Induktionsheizspule selbst zu ermöglichen.

### Kurzbeschreibung der Zeichnung

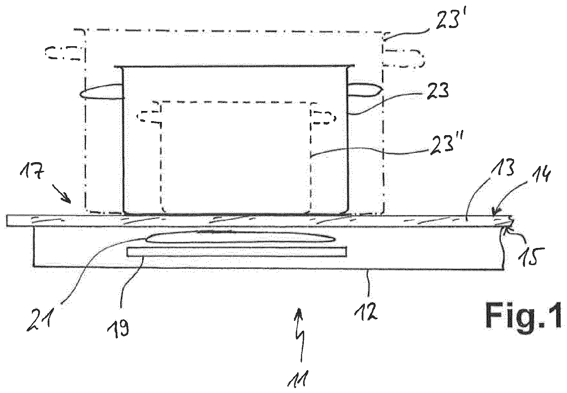

Ein Ausführungsbeispiel der Erfindung ist in der Zeichnung schematisch dargestellt und wird im Folgenden näher erläutert. Die Fig. 1 zeigt eine schematische Seitenansicht eines erfindungsgemäßen Induktionskochfelds mit einer magnetischen Linse zwischen einer Induktionsheizspule und einem auf eine Kochfeldplatte darüber aufgesetzten Kochgefäß.

### Detaillierte Beschreibung des Ausführungsbeispiels

In der Fig. 1 ist ein erfindungsgemäßes Induktionskochfeld 11 dargestellt mit einem üblichen Gehäuse 12, vorteilhaft aus Kunststoff, das nach oben hin durch eine Kochfeldplatte 12 abgedeckt ist. Die Kochfeldplatte 13 besteht vorteilhaft aus üblicher Glaskeramik, alternativ aus Hartglas, und weist eine Oberseite 14 und eine Unterseite 15 auf. An der Oberseite 14 ist eine Kochstelle 17 vorgesehen, die beispielsweise durch eine Markierung auf der Oberseite 14 genau gezeigt sein kann.

Im Induktionskochfeld 11 ist unterhalb der Kochstelle 17 eine Induktionsheizspule 19 sehr vereinfacht dargestellt. Sie entspricht im Wesentlichen einer üblichen Induktionsheizspule aus einer einlagigen dicken Kupferlitze, die spiralig gewickelt ist. Sie kann beispielsweise an der Unterseite übliche Ferritstäbe aufweisen, die flach sind und in radialer Richtung verlaufen. Des Weiteren kann sie in dem Gehäuse 12 befestigt sein, beispielsweise darauf aufliegen.

Oberhalb der Induktionsheizspule 19 ist sehr schematisch eine erfindungsgemäße magnetische Linse 21 dargestellt. Sie weist flächenmäßig eine ähnliche Ausdehnung auf wie die Induktionsheizspule 19, und ist hier etwas kleiner dargestellt. Sie kann aber auch viel kleiner oder größer sein, abhängig von dem hauptsächlich gewünschten Zweck. Des Weiteren können auch mehrere derartige magnetische Linsen vorgesehen sein, die dann aber kleiner ausgebildet sein sollten, so dass beispielsweise vier bis sieben solcher magnetischer Linsen in enger Anordnung in etwa die Fläche der Induktionsheizspule 19 aufweisen bzw. abdecken.

Die magnetische Linse 21 verläuft außerdem in einer Ebene, die parallel ist zur Kochfeldplatte 13 bzw. deren Unterseite 15 und somit auch in etwa parallel ist zur Ebene, in der die Induktionsheizspule 19 verläuft. So fallen ihre Mittelsenkrechten zusammen oder verlaufen zumindest parallel.

Zur Ausbildung der magnetischen Linse 21 wird auf die DE 102011006106 B4 verwiesen, alternativ auf die DE 2555744 A1 oder die EP 1498929 A2. Sie besteht aus Metamaterial wie eingangs beschrieben.

Diese magnetische Linse 21 kann durch ihre Ausbildung die Entfernung zwischen der Induktionsheizspule 19 und einem Boden eines auf die Kochfeldplatte 13 im Bereich der Kochstelle 17 aufgesetzten Kochgefäßes 23 sozusagen verringern bzw. das Magnetfeld über diese Entfernung besser leiten, so dass Effizienz und Effektivität der Energieeinkopplung in den Boden des Kochgefäßes 23 steigen. Alternativ kann ein Magnetfeld aufgeweitet werden.

In weiterer Ausgestaltung der Erfindung kann die magnetische Linse 21 nicht nur aus einem allgemeinen erfindungsgemäßen Metamaterial bestehen, sondern aus einem NIM-Material. Dieses kann eine negative Permittivität ε und eine negative Permeabilität µ haben. So kann auch bei einer offensichtlich flach ausgebildeten magnetischen Linse 21 erreicht werden, dass das Magnetfeld der Induktionsheizspule 19 beeinflusst wird, nämlich insbesondere aufgeweitet wird oder alternativ fokussiert wird. Besonders vorteilhaft ist die magnetische Linse 21 aus NIM-Material als vorgenannte Pendry-Linse bzw. als Superlinse ausgebildet.

Eine Aufweitung des Magnetfelds kann für ein großes, strichpunktiert dargestelltes Kochgefäß 23' gut geeignet sein, dessen Bodenfläche die Fläche der Induktionsheizspule 19 deutlich überragt. Durch ein aufgeweitetes Magnetfeld kann ein besserer und effizienterer Energieeintrag in den Boden des Kochgefäßes 23' stattfinden.

Alternativ kann ein deutlich kleineres Kochgefäß 23" auf die Kochstelle 17 bzw. oberhalb der Induktionsheizspule 19 aufgesetzt werden. Hier sollte das Magnetfeld sozusagen fokussiert werden bzw. auf eine kleinere Fläche gebracht werden. Dafür eignet sich die magnetische Linse 21 auch sehr gut, vor allem wenn sie eben aus dem vorgenannten NIM-Material besteht. Dazu kann sie beispielsweise aus sogenannten Split-Ring-Resonatoren bestehen, die dem Fachmann bekannt sind, beispielsweise aus dem Artikel von Ekaterina Shamonina im Physik Journal 5 (2006) Nr. 8/9, Seite 51 bis 56. Mit einer solchen magnetischen Linse 21 kann ein Bündeln des Magnetfelds der Induktionsheizspule 19 in einem Boden eines kleinen Kochgefäßes 23" erheblich besser vorgenommen werden als mit den ansonsten üblichen Ferritstäben an der Unterseite der Induktionsheizspule 19, welche an sich hauptsächlich das Magnetfeld vergleichmäßigen.

In weiterer Ausgestaltung der Erfindung ist es leicht vorstellbar, dass die magnetische Linse 21 nicht nur stationär und ortsfest oberhalb der Induktionsheizspule 19 angeordnet ist, sondern auch verschiebbar bzw. bewegbar ist. So können seitlich versetzte Kochgefäße 23 auch gut beheizt werden durch die Induktionsheizspule 19, weil dadurch sozusagen eine Fokussierung und somit Umlenkung des Magnetfelds zur Seite hin möglich ist. Dazu kann es ausreichen, einen vereinfachten Bewegungsmechanismus so auszugestalten, dass die magnetische Linse 21 auf einer Kreisbahn über der Induktionsheizspule 19 bewegt wird, beispielsweise mit einem Radius von einigen Zentimetern und einem Mittelpunkt der Kreisbahn über dem Mittelpunkt der Induktionsheizspule 19. Die magnetische Linse 21 kann dann so positioniert werden, dass sie das Magnetfeld möglichst gut in ein seitlich versetzt aufgestelltes Kochgefäß 23 leitet bzw. fokussiert.

## Patentansprüche

1. Induktionskochfeld (11) mit einer Kochfeldplatte (13) und mit einer darunter angeordneten induktiven Beheizung in einer Ebene, wobei die induktive Beheizung mindestens eine Induktionsheizspule (19) aufweist,
wobei:
- in einer Ebene zwischen der Ebene der induktiven Beheizung (19) und der Unterseite (15) der Kochfeldplatte (13) eine magnetische Linse (21) vorgesehen ist,
- die magnetische Linse (21) dazu ausgebildet ist, das von der induktiven Beheizung oder der Induktionsheizspule (19) erzeugte Magnetfeld zu beeinflussen oder sogar möglicherweise etwas abzulenken oder umzulenken oder zu formen,
**dadurch gekennzeichnet, dass**
- die magnetische Linse (21) zwischen der induktiven Beheizung oder den Induktionsheizspulen (19) und der Unterseite (15) der Kochfeldplatte (13) vorgesehen ist,
- die magnetische Linse (21) eine Fläche überdeckt, die im Wesentlichen der Flächenüberdeckung oder der Fläche der Induktionsheizspule (21) entspricht,
- die magnetische Linse (21) aus Metamaterialien besteht oder Metamaterialien aufweist.

2. Induktionskochfeld nach Anspruch 1, **dadurch gekennzeichnet, dass** die magnetische Linse (21) zwischen der induktiven Beheizung und einem auf die Kochfeldplatte (13) aufzusetzenden Kochgefäß (23) vorgesehen ist.

3. Induktionskochfeld nach Anspruch 1 oder 2, **dadurch gekennzeichnet, dass** pro einzelner Induktionsheizspule (19) eine einzelne über dieser Induktionsheizspule angeordnete magnetische Linse (21) vorgesehen ist.

4. Induktionskochfeld nach einem der vorhergehenden Ansprüche, **dadurch gekennzeichnet, dass** die magnetische Linse (21) flach ist und im Wesentlichen in der Ebene verläuft, welche parallel ist zu einer Ebene, in der die induktive Beheizung bzw. die Induktionsheizspulen (19) verlaufen.

5. Induktionskochfeld nach einem der vorhergehenden Ansprüche, **dadurch gekennzeichnet, dass** die Metamaterialien ein NIM-Material mit negativer Permittivität ε und/oder negativer Permeabilität µ sind.

6. Induktionskochfeld nach einem der vorhergehenden Ansprüche, **gekennzeichnet durch** eine Ansteuerung für die induktive Beheizung in einem Bereich zwischen 20 kHz und 100 kHz.

7. Induktionskochfeld nach einem der vorhergehenden Ansprüche, **dadurch gekennzeichnet, dass** die magnetische Linse (21) bewegbar ist, vorzugsweise bewegbar in einer Ebene parallel zu der Kochfeldplatte (13), insbesondere unabhängig von der Induktionsheizspule (19).

8. Induktionskochfeld nach einem der Ansprüche 1 bis 6, **dadurch gekennzeichnet, dass** die magnetische Linse (21) mit einer Induktionsheizspule (19) verbunden ist.

9. Induktionskochfeld nach Anspruch 8, **dadurch gekennzeichnet, dass** die Induktionsheizspule (19) zusammen mit der magnetischen Linse (21) bewegbar ist in einer Ebene parallel zur Kochfeldplatte (13).

10. Induktionskochfeld nach einem der vorhergehenden Ansprüche, **dadurch gekennzeichnet, dass** die magnetische Linse (21) derart ausgebildet ist und über einer Induktionsheizspule (19) angeordnet ist, dass die induktive Beheizung eines auf die Kochfeldplatte (13) aufgestellten Topfes (23) über einen größeren Abstand erfolgt, vorzugsweise mindestens 5 cm bis 15 cm.

11. Induktionskochfeld nach einem der vorhergehenden Ansprüche, **dadurch gekennzeichnet, dass** die magnetische Linse (21) divergierend ausgebildet ist derart, dass eine Induktionsheizspule (19) dazu ausgebildet ist, sein flächenmäßig größeres Kochgefäß (23) passend zu beheizen.

## Claims

1. Induction cooktop (11) comprising a cooktop hotplate (13) and an inductive heating arranged underneath in a plane, wherein the inductive heating includes at least one induction heating coil (19),
wherein:
- a magnetic lens (21) is provided in a plane between the plane of the inductive heating (19) and the bottom side (15) of the cooktop hotplate (13),
- the magnetic lens (21) is configured to influence or possibly even to some extent to deflect or to redirect or to shape the magnetic field generated by the inductive heating or the induction heating coil (19),
**characterized in that**
- the magnetic lens (21) is provided between the inductive heating or the induction heating coils (19) and the bottom side (15) of the cooktop hotplate (13),
- the magnetic lens (21) covers a surface area that corresponds essentially to the surface covering or the surface area of the induction heating coil (21),
- the magnetic lens (21) is composed of metamaterials or includes metamaterials.

2. Induction cooktop according to claim 1, **characterized in that** the magnetic lens (21) is provided between the inductive heating and a cooking vessel (23) to be placed onto the cooktop hotplate (13).

3. Induction cooktop according to claim 1 or 2, **characterized in that** per individual induction heating coil (19) one single magnetic lens (21) is provided above said induction heating coil.

4. Induction cooktop according to any of the preceding claims, **characterized in that** the magnetic lens (21) is flat and extends essentially in the plane which is parallel to a plane where the inductive heating and the induction heating coils (19), respectively, extend.

5. Induction cooktop according to any of the preceding claims, **characterized in that** the metamaterials are a NIM material of negative permittivity ε and/or negative permeability µ.

6. Induction cooktop according to any of the preceding claims, **characterized by** an activation for the inductive heating in a range between 20 kHz and 100 kHz.

7. Induction cooktop according to any of the preceding claims, **characterized in that** the magnetic lens (21) is movable, preferably movable in a plane parallel to the cooktop hotplate (13), in particular independently of the induction heating coil (19).

8. Induction cooktop according to any of claims 1 to 6, **characterized in that** the magnetic lens (21) is connected to an induction heating coil (19).

9. Induction cooktop according to claim 8, **characterized in that** the induction heating coil (19) is movable together with the magnetic lens (21) in a plane parallel to the cooktop hotplate (13).

10. Induction cooktop according to any of the preceding claims, **characterized in that** the magnetic lens (21) is configured and arranged above an induction heating coil (19) such that the inductive heating of a pan (23) placed onto the cooktop hotplate (13) is effected across a greater distance, preferably at least 5 cm to 15 cm.

11. Induction cooktop according to any of the preceding claims, **characterized in that** the magnetic lens (21) is diverging such that an induction heating coil (19) is configured to heat a cooking vessel (23) of greater surface area adequately.

## Revendications

1. Table de cuisson à induction (11), comprenant une plaque de cuisson (13) et, disposé au-dessous de celle-ci, un chauffage par induction dans un plan, le chauffage par induction possédant au moins une bobine de chauffage par induction (19),
- une lentille magnétique (21) se trouvant dans un plan entre le plan du chauffage par induction (19) et le côté inférieur (15) de la plaque de cuisson (13),
- la lentille magnétique (21) étant configurée pour influencer le champ magnétique généré par le chauffage par induction ou la bobine de chauffage par induction (19), ou même éventuellement provoquer légèrement sa déviation ou sa déflexion ou sa mise en forme,
**caractérisée en ce que**
- la lentille magnétique (21) est disposée entre le chauffage par induction ou les bobines de chauffage par induction (19) et le côté inférieur (15) de la plaque de cuisson (13),
- la lentille magnétique (21) recouvre une surface qui correspond sensiblement au recouvrement surfacique ou à la surface de la bobine de chauffage par induction (21),
- la lentille magnétique (21) se compose de métamatériaux ou possède des métamatériaux.

2. Table de cuisson à induction selon la revendication 1, **caractérisée en ce que** la lentille magnétique (21) se trouve entre le chauffage par induction et un récipient de cuisson (23) à poser sur la plaque de cuisson (13).

3. Table de cuisson à induction selon la revendication 1 ou 2, **caractérisée en ce que** pour chaque bobine de chauffage par induction (19) individuelle, une lentille magnétique (21) individuelle disposée au-dessus de cette bobine de chauffage par induction est prévue.

4. Table de cuisson à induction selon l'une des revendications précédentes, **caractérisée en ce que** la lentille magnétique (21) est plate et s'étend sensiblement dans le plan, lequel est parallèle à un plan dans lequel s'étendent le chauffage par induction ou les bobines de chauffage par induction (19).

5. Table de cuisson à induction selon l'une des revendications précédentes, **caractérisée en ce que** les métamatériaux sont un matériau NIM ayant une permittivité ε négative et/ou une perméabilité µ négative.

6. Table de cuisson à induction selon l'une des revendications précédentes, **caractérisée par** une excitation pour le chauffage par induction dans une plage entre 20 kHz et 100 kHz.

7. Table de cuisson à induction selon l'une des revendications précédentes, **caractérisée en ce que** la lentille magnétique (21) est mobile, de préférence mobile dans un plan parallèle à la plaque de cuisson (13), notamment indépendamment de la bobine de chauffage par induction (19).

8. Table de cuisson à induction selon l'une des revendications 1 à 6, **caractérisée en ce que** la lentille magnétique (21) est reliée à une bobine de chauffage par induction (19).

9. Table de cuisson à induction selon la revendication 8, **caractérisée en ce que** la bobine de chauffage par induction (19) peut être déplacée conjointement avec la lentille magnétique (21) dans un plan parallèle à la plaque de cuisson (13).

10. Table de cuisson à induction selon l'une des revendications précédentes, **caractérisée en ce que** la lentille magnétique (21) est configurée et disposée au-dessus d'une bobine de chauffage par induction (19) de telle sorte que le chauffage par induction d'une casserole (23) posée sur la plaque de cuisson (13) s'effectue sur une grande distance, de préférence d'au moins 5 cm à 15 cm.

11. Table de cuisson à induction selon l'une des revendications précédentes, **caractérisée en ce que** la lentille magnétique (21) est de configuration divergente, de sorte qu'une bobine de chauffage par induction (19) est configurée pour chauffer de manière adaptée son récipient de cuisson (23) à la surface plus grande.
